(19)

Europäisches
Patentamt
European
Patent Office
Office européen
des brevets

(11) **EP 4 353 086 A1**

(12) **EUROPEAN PATENT APPLICATION**
published in accordance with Art. 153(4) EPC

(43) Date of publication:
**17.04.2024 Bulletin 2024/16**

(21) Application number: **22820300.6**

(22) Date of filing: **09.06.2022**

(51) International Patent Classification (IPC):
**A23L 27/00** (2016.01)  **A23L 2/60** (2006.01)

(52) Cooperative Patent Classification (CPC):
**A23L 2/60; A23L 27/00**

(86) International application number:
**PCT/JP2022/023258**

(87) International publication number:
**WO 2022/260121 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.06.2021 JP 2021097339**

(71) Applicant: **Suntory Holdings Limited
Osaka 530-8203 (JP)**

(72) Inventors:
• **MITSUI Ryoki
  Soraku-gun, Kyoto 619-0284 (JP)**
• **YOSHIDA Junki
  Kawasaki-shi, Kanagawa 211-0067 (JP)**
• **YOKOO Yoshiaki
  Kawasaki-shi, Kanagawa 211-0067 (JP)**

(74) Representative: **Mewburn Ellis LLP
Aurora Building
Counterslip
Bristol BS1 6BX (GB)**

(54) **SWEETENER COMPOSITION**

(57) Provided is a novel sweetener composition containing a steviol glycoside and a flavor component. Also provided are a food and drink and a beverage containing the sweetener composition. The sweetener composition contains a steviol glycoside and a flavor component, wherein the total content of rebaudioside A, rebaudioside D, and rebaudioside M is 15-80 wt% with respect to the total steviol glycoside content, and the flavor component contains one or more selected from the group consisting of furaneol, hydroxymethylfurfural, furfural, vanillin, cyclotene, and damascenone.

EP 4 353 086 A1

## Description

Technical Field

The present invention relates to a sweetener composition. More specifically, the present invention relates to a sweetener composition comprising a steviol glycoside and a flavor component, and a food and drink and a beverage comprising the sweetener composition.

Background Art

The leaves of stevia (*Stevia rebaudiana*) of the family *Compositae* contain a secondary metabolite called steviol, one kind of diterpenoid. Steviol glycoside exhibits approximately 300 times the sweetness of sugar and is therefore used as a calorie-less sweetener in a food industry. Obesity is internationally expanding as a serious social problem. Also from the viewpoint of the advancement of health and reduction in medical care cost, a demand for calorie-less sweeteners is growing with each passing day. Although artificially synthesized amino acid derivatives aspartame and acesulfame potassium are currently used as artificial sweeteners, naturally occurring calorie-less sweeteners such as steviol glycosides are expected to be safer and to easily gain public acceptance.

In general, methods of performing extraction with hot water of 100°C or lower are known as methods for extracting sweet components such as steviol glycosides from stevia. In Non Patent Literatures 1 and 2, attempts have been made to recover antioxidative physiologically active substances by allowing high-pressure hot water to act on stevia.

Citation List

Non Patent Literature

Non Patent Literature 1: D. B. Kovacevic, F. J. Barba, D. Granato, C. M. Galanakis, Z. Herceg, V. Dragovic-Uzelac, P. Puntnik: Pressurized hot water extraction (PHWE) for the green recovery of bioactive compounds and steviol glycosides from Stevia rebaudiana Bertoni Leaves, Food Chemistry, 254 (2018), 150-157

Non Patent Literature 2: Z. Yang, B. Uhler, and T. Lipkie: Microwave-Assisted Subcritical Water Extraction of Steviol Glycosides From Stevia rebaudiana Leaves, Natural Product Communication, Vol. 14 (6), 2019, 1-4

Summary of Invention

Technical Problem

The present invention provides a novel sweetener composition comprising a steviol glycoside and a flavor component. The present invention also provides a food and drink and a beverage comprising the sweetener composition.

Solution to Problem

The present invention includes an invention of the following aspects.

[1] A sweetener composition comprising a steviol glycoside and a flavor component, wherein

the total content of rebaudioside A, rebaudioside D, and rebaudioside M is 15 to 80 wt% with respect to the total steviol glycoside content, and

the flavor component comprises one or more selected from the group consisting of furaneol, hydroxymethylfurfural, furfural, vanillin, cyclotene, and damascenone.

[2] The sweetener composition according to [1], wherein the flavor component comprises furaneol, and a furaneol content in the sweetener composition is 0.00005 to 0.035 wt% with respect to the solid content of the sweetener composition.

[3] The sweetener composition according to [1] or [2], wherein the total steviol glycoside content is 5 to 50 wt% with respect to the solid content of the sweetener composition.

[4] The sweetener composition according to any one of [1] to [3], wherein a furaneol/total steviol glycoside weight ratio is 0.001 to 0.8.

[5] The sweetener composition according to any one of [1] to [4], wherein the sweetener composition comprises rebaudioside B at a ratio of 1 to 85 wt% to the total steviol glycoside content.

[6] The sweetener composition according to any one of [1] to [5], wherein the flavor component is a flavor component derived from a stevia extract.

[7] The sweetener composition according to any one of [1] to [6], wherein the sweetener composition is obtained by hydrothermally treating a stevia plant under conditions involving a reaction temperature of 130°C or higher and a severity parameter of 30 to 4000 calculated according to the following expression (1):

[Math. 1]

$$ \text{Severity parameter} \qquad R_o = \int_0^t \exp\left(\frac{T(t) - T_r}{\omega}\right) dt \qquad \text{Expression (1)} $$

T(t): Time-dependent change in internal temperature of reaction container [°C]
Tr: Reference temperature (= 100°C)
ω: Constant (= 14.75)
t: Time (min)

[8] The sweetener composition according to any one of [1] to [7], wherein the total steviol glycosides consist of rebaudioside A, rebaudioside B, rebaudioside C, rebaudioside D, rebaudioside E, rebaudioside F, rebaudioside I, rebaudioside M, rebaudioside N, and stevioside.

[9] A food and drink comprising the sweetener composition according to any one of [1] to [8].

[10] The food and drink according to [9], wherein the food and drink is a beverage.

Advantageous Effects of Invention

The present invention provides a novel sweetener composition comprising a steviol glycoside and a flavor component, and a food and drink and a beverage comprising the sweetener composition. In a preferred aspect, the present invention provides a sweetener composition whose sweetness and flavor are perceived in a well-balanced manner upon eating, and a food and drink and a beverage comprising the sweetener composition.

Brief Description of Drawings

[Figure 1] Figure 1 is a diagram showing a steviol glycoside recovery rate against a severity parameter.
[Figure 2] Figure 2 is a diagram showing a steviol glycoside recovery rate against a severity parameter (single log).
[Figure 3] Figure 3 is a diagram showing the production of furaneol against a severity parameter.
[Figure 4] Figure 4 is a diagram showing the production of hydroxymethylfurfural against a severity parameter.

Description of Embodiments

Hereinafter, the present invention will be described in detail. Embodiments given below are illustrations for describing the present invention and do not intend to limit the present invention to the embodiments. The present invention can be carried out in various forms without departing from the spirit of the present invention. All literatures, laid-open publications, patent publications, and other patent literatures cited herein are incorporated herein by reference.

In the present specification, the terms "Reb" and "Reb." mean the same meaning and both mean rebaudioside.

In the present specification, the term "ppm" means "ppm by mass" unless otherwise specified. Since the specific gravity of a beverage is usually 1, the term "ppm by mass" can be equated with "mg/L". In the present specification, the term "approximately " means that an identity exists in the range of ±10% of a numeric value following the term "approximately".

1. Sweetener composition comprising steviol glycoside and flavor component

The present invention relates to a sweetener composition comprising a steviol glycoside and a flavor component. Specifically, the present invention relates to a sweetener composition comprising a steviol glycoside and a flavor component, wherein the total content of rebaudioside A, rebaudioside D, and rebaudioside M is 15 to 80 wt% with respect to the total steviol glycoside content, and the flavor component comprises one or more selected from the group consisting of furaneol, hydroxymethylfurfural, furfural, vanillin, cyclotene, and damascenone.

In the present specification, the "total steviol glycoside content" means the total content of steviol glycosides contained in the sweetener composition. In one aspect of the present invention, the "total steviol glycoside content" means a total amount of rebaudioside A, rebaudioside B, rebaudioside C, rebaudioside D, rebaudioside E, rebaudioside F, rebaudioside I, rebaudioside M, rebaudioside N, and stevioside. In one aspect of the present invention, the total steviol glycosides consist of rebaudioside A, rebaudioside B, rebaudioside C, rebaudioside D, rebaudioside E, rebaudioside F, rebaudioside I, rebaudioside M, rebaudioside N, and stevioside.

In one aspect of the present invention, the total content of rebaudioside A, rebaudioside D, and rebaudioside M in the sweetener composition is 15 to 80 wt% with respect to the total steviol glycoside content. In another aspect, the total content of rebaudioside A, rebaudioside D, and rebaudioside M may be, for example, 20 to 80 wt%, 25 to 80 wt%, 30 to 80 wt%, 35 to 80 wt%, 40 to 80 wt%, 45 to 80 wt%, 50 to 80 wt%, 15 to 75 wt%, 20 to 75 wt%, 25 to 75 wt%, 30 to 75 wt%, 35 to 75 wt%, 40 to 75 wt%, 45 to 75 wt%, 50 to 75 wt%, 15 to 70 wt%, 20 to 70 wt%, 25 to 70 wt%, 30 to 70 wt%, 35 to 70 wt%, 40 to 70 wt%, 15 to 65 wt%, 20 to 65 wt%, 25 to 65 wt%, 30 to 65 wt%, 35 to 65 wt%, 40 to 65 wt%, 15 to 60 wt%, 20 to 60 wt%, 22 to 60 wt%, 25 to 60 wt%, 27 to 60 wt%, 30 to 60 wt%, 32 to 60 wt%, 35 to 60 wt%, 37 to 60 wt%, 40 to 60 wt%, 15 to 55 wt%, 20 to 55 wt%, 22 to 55 wt%, 25 to 55 wt%, 27 to 55 wt%, 30 to 55 wt%, 32 to 55 wt%, 35 to 55 wt%, 37 to 55 wt%, 40 to 55 wt%, 15 to 50 wt%, 20 to 50 wt%, 22 to 50 wt%, 25 to 50 wt%, 27 to 50 wt%, 30 to 50 wt%, 32 to 50 wt%, 35 to 50 wt%, 37 to 50 wt%, 15 to 45 wt%, 17 to 45 wt%, 20 to 45 wt%, 22 to 45 wt%, 25 to 45 wt%, 27 to 45 wt%, 30 to 45 wt%, 15 to 40 wt%, 17 to 40 wt%, 20 to 40 wt%, 22 to 40 wt%, 25 to 40 wt%, 27 to 40 wt%, or 30 to 40 wt% with respect to the total steviol glycoside content. The steviol glycoside can be quantified by a known method using a liquid chromatograph-mass spectrometer.

In one aspect of the present invention, the content of rebaudioside A may be, for example, 5 to 60 wt%, 10 to 60 wt%, 12 to 60 wt%, 15 to 60 wt%, 20 to 60 wt%, 25 to 60 wt%, 27 to 60 wt%, 30 to 60 wt%, 35 to 60 wt%, 37 to 60 wt%, 40 to 60 wt%, 5 to 55 wt%, 10 to 55 wt%, 12 to 55 wt%, 15 to 55 wt%, 20 to 55 wt%, 25 to 55 wt%, 27 to 55 wt%, 30 to 55 wt%, 35 to 55 wt%, 37 to 55 wt%, 40 to 55 wt%, 5 to 50 wt%, 10 to 50 wt%, 12 to 50 wt%, 15 to 50 wt%, 20 to 50 wt%, 25 to 50 wt%, 27 to 50 wt%, 30 to 50 wt%, 35 to 50 wt%, 37 to 50 wt%, 40 to 50 wt%, 5 to 45 wt%, 10 to 45 wt%, 12 to 45 wt%, 15 to 45 wt%, 20 to 45 wt%, 25 to 45 wt%, 27 to 45 wt%, 30 to 45 wt%, 35 to 45 wt%, 5 to 40 wt%, 10 to 40 wt%, 12 to 40 wt%, 15 to 40 wt%, 20 to 40 wt%, 25 to 40 wt%, 27 to 40 wt%, or 30 to 40 wt% with respect to the total steviol glycoside content.

In one aspect of the present invention, the content of rebaudioside D may be, for example, 1 to 30 wt%, 2 to 30 wt%, 3 to 30 wt%, 4 to 30 wt%, 5 to 30 wt%, 6 to 30 wt%, 7 to 30 wt%, 8 to 30 wt%, 9 to 30 wt%, 10 to 30 wt%, 1 to 25 wt%, 2 to 25 wt%, 3 to 25 wt%, 4 to 25 wt%, 5 to 25 wt%, 6 to 25 wt%, 7 to 25 wt%, 8 to 25 wt%, 9 to 25 wt%, 10 to 25 wt%, 1 to 20 wt%, 2 to 20 wt%, 3 to 20 wt%, 4 to 20 wt%, 5 to 20 wt%, 6 to 20 wt%, 7 to 20 wt%, 8 to 20 wt%, 9 to 20 wt%, 10 to 20 wt%, 1 to 15 wt%, 2 to 15 wt%, 3 to 15 wt%, 4 to 15 wt%, 5 to 15 wt%, 6 to 15 wt%, 7 to 15 wt%, 8 to 15 wt%, 9 to 15 wt%, or 10 to 15 wt% with respect to the total steviol glycoside content.

In one aspect of the present invention, the content of rebaudioside M may be, for example, 1 to 20 wt%, 2 to 20 wt%, 3 to 20 wt%, 4 to 20 wt%, 5 to 20 wt%, 6 to 20 wt%, 7 to 20 wt%, 8 to 20 wt%, 9 to 20 wt%, 10 to 20 wt%, 1 to 15 wt%, 2 to 15 wt%, 3 to 15 wt%, 4 to 15 wt%, 5 to 15 wt%, 1 to 12 wt%, 2 to 12 wt%, 3 to 12 wt%, 4 to 12 wt%, 5 to 12 wt%, 1 to 10 wt%, 2 to 10 wt%, 3 to 10 wt%, 4 to 10 wt%, 5 to 10 wt%, 1 to 9 wt%, 2 to 9 wt%, 3 to 9 wt%, 4 to 9 wt%, or 5 to 9 wt% with respect to the total steviol glycoside content.

In one aspect of the present invention, the content of rebaudioside B may be, for example, 1 to 85 wt%, 5 to 85 wt%, 10 to 85 wt%, 12 to 85 wt%, 15 to 85 wt%, 17 to 85 wt%, 20 to 85 wt%, 22 to 85 wt%, 25 to 85 wt%, 27 to 85 wt%, 30 to 85 wt%, 32 to 85 wt%, 35 to 85 wt%, 37 to 85 wt%, 40 to 85 wt%, 1 to 80 wt%, 5 to 80 wt%, 10 to 80 wt%, 12 to 80 wt%, 15 to 80 wt%, 17 to 80 wt%, 20 to 80 wt%, 22 to 80 wt%, 25 to 80 wt%, 27 to 80 wt%, 30 to 80 wt%, 32 to 80 wt%, 35 to 80 wt%, 37 to 80 wt%, 40 to 80 wt%, 1 to 75 wt%, 5 to 75 wt%, 10 to 75 wt%, 12 to 75 wt%, 15 to 75 wt%, 17 to 75 wt%, 20 to 75 wt%, 22 to 75 wt%, 25 to 75 wt%, 27 to 75 wt%, 30 to 75 wt%, 32 to 75 wt%, 35 to 75 wt%, 37 to 75 wt%, or 40 to 75 wt% with respect to the total steviol glycoside content.

In one aspect of the present invention, the total content of rebaudioside A and rebaudioside D may be, for example, 5 to 80 wt%, 10 to 80 wt%, 15 to 80 wt%, 20 to 80 wt%, 25 to 80 wt%, 30 to 80 wt%, 35 to 80 wt%, 40 to 80 wt%, 45 to 80 wt%, 10 to 70 wt%, 15 to 70 wt%, 20 to 70 wt%, 25 to 70 wt%, 30 to 70 wt%, 35 to 70 wt%, 10 to 65 wt%, 15 to 65 wt%, 20 to 65 wt%, 25 to 65 wt%, 30 to 65 wt%, 35 to 65 wt%, 10 to 60 wt%, 15 to 60 wt%, 20 to 60 wt%, 22 to 60 wt%, 25 to 60 wt%, 27 to 60 wt%, 30 to 60 wt%, 32 to 60 wt%, 35 to 60 wt%, 10 to 55 wt%, 15 to 55 wt%, 20 to 55 wt%, 22 to 55 wt%, 25 to 55 wt%, 27 to 55 wt%, 30 to 55 wt%, 32 to 55 wt%, 35 to 55 wt%, 10 to 50 wt%, 15 to 50 wt%, 20 to 50 wt%, 22 to 50 wt%, 25 to 50 wt%, 27 to 50 wt%, 30 to 50 wt%, 32 to 50 wt%, 35 to 50 wt%, 10 to 45 wt%, 15 to 45 wt%, 17 to 45 wt%, 20 to 45 wt%, 22 to 45 wt%, 25 to 45 wt%, 10 to 40 wt%, 15 to 40 wt%, 17 to 40 wt%, 20 to 40 wt%, 22 to 40 wt%, or 25 to 40 wt% with respect to the total steviol glycoside content.

In one aspect of the present invention, the total content of rebaudioside A and rebaudioside M may be, for example, 5 to 70 wt%, 10 to 70 wt%, 15 to 70 wt%, 20 to 70 wt%, 25 to 70 wt%, 30 to 70 wt%, 10 to 60 wt%, 15 to 60 wt%, 20 to 60 wt%, 22 to 60 wt%, 25 to 60 wt%, 27 to 60 wt%, 30 to 60 wt%, 32 to 60 wt%, 35 to 60 wt%, 10 to 55 wt%, 15 to 55 wt%, 20 to 55 wt%, 22 to 55 wt%, 25 to 55 wt%, 27 to 55 wt%, 30 to 55 wt%, 32 to 55 wt%, 35 to 55 wt%, 10 to 50 wt%, 15 to 50 wt%, 20 to 50 wt%, 22 to 50 wt%, 25 to 50 wt%, 27 to 50 wt%, 30 to 50 wt%, 32 to 50 wt%, 35 to 50 wt%, 10 to 45 wt%, 15 to 45 wt%, 17 to 45 wt%, 20 to 45 wt%, 22 to 45 wt%, 25 to 45 wt%, 10 to 40 wt%, 15 to 40 wt%, 17 to 40 wt%, 20 to 40 wt%, 22 to 40 wt%, or 25 to 40 wt% with respect to the total steviol glycoside content.

In one aspect of the present invention, the total content of rebaudioside D and rebaudioside M may be, for example, 1 to 40 wt%, 3 to 40 wt%, 5 to 40 wt%, 7 to 40 wt%, 10 to 40 wt%, 12 to 40 wt%, 14 to 40 wt%, 15 to 40 wt%, 1 to 30 wt%, 3 to 30 wt%, 5 to 30 wt%, 7 to 30 wt%, 10 to 30 wt%, 12 to 30 wt%, 14 to 30 wt%, 15 to 30 wt%, 1 to 25 wt%, 3 to 25 wt%, 5 to 25 wt%, 7 to 25 wt%, 10 to 25 wt%, 1 to 20 wt%, 3 to 20 wt%, 5 to 20 wt%, 7 to 20 wt%, 10 to 20 wt%, 1 to 17 wt%, 3 to 17 wt%, 5 to 17 wt%, 7 to 17 wt%, 10 to 17 wt%, 1 to 15 wt%, 3 to 15 wt%, 5 to 15 wt%, or 7 to 15 wt% with respect to the total steviol glycoside content.

In one aspect of the present invention, the total steviol glycoside content is 5 to 50 wt% with respect to the solid content of the sweetener composition. In another aspect, the total steviol glycoside content may be, for example, 7 to 50 wt%, 10 to 50 wt%, 12 to 50 wt%, 14 to 50 wt%, 5 to 40 wt%, 7 to 40 wt%, 10 to 40 wt%, 12 to 40 wt%, 14 to 40 wt%, 5 to 30 wt%, 7 to 30 wt%, 10 to 30 wt%, 12 to 30 wt%, 14 to 30 wt%, 5 to 20 wt%, 7 to 20 wt%, 10 to 20 wt%, 12 to 20 wt%, or 14 to 20 wt% with respect to the solid content of the sweetener composition. In the present specification, the solid content can be determined using a Brix meter (e.g., Brix meter RX-5000$\alpha$ manufactured by Atago Co., Ltd.) when the sweetener composition is a liquid. The amount of total steviol glycosides with respect to the solid content of the composition can be calculated using the amount of the steviol glycoside measured with a liquid chromatograph-mass spectrometer or the like.

In one aspect of the present invention, the total content of rebaudioside A, rebaudioside D, and rebaudioside M contained in the sweetener composition may be, for example, 1 to 30 wt%, 2 to 30 wt%, 3 to 30 wt%, 4 to 30 wt%, 5 to 30 wt%, 1 to 20 wt%, 2 to 20 wt%, 3 to 20 wt%, 4 to 20 wt%, 5 to 20 wt%, 1 to 15 wt%, 2 to 15 wt%, 3 to 15 wt%, 4 to 15 wt%, 5 to 15 wt%, 1 to 12 wt%, 2 to 12 wt%, 3 to 12 wt%, 4 to 12 wt%, 5 to 12 wt%, 1 to 10 wt%, 2 to 10 wt%, 3 to 10 wt%, 4 to 10 wt%, or 5 to 10 wt% with respect to the solid content of the sweetener composition.

In one aspect of the present invention, the total steviol glycosides may be, for example, 1,000 to 20,000 ppm, 3,000 to 20,000 ppm, 5,000 to 20,000 ppm, 7,000 to 20,000 ppm, 9,000 to 20,000 ppm, 9,500 to 20,000 ppm, 10,000 to 20,000 ppm, 1,000 to 18,000 ppm, 3,000 to 18,000 ppm, 5,000 to 18,000 ppm, 7,000 to 18,000 ppm, 9,000 to 18,000 ppm, 9,500 to 18,000 ppm, 10,000 to 18,000 ppm, 1,000 to 16,000 ppm, 3,000 to 16,000 ppm, 5,000 to 16,000 ppm, 7,000 to 16,000 ppm, 9,000 to 16,000 ppm, 9,500 to 16,000 ppm, or 10,000 to 16,000 ppm with respect to the total weight of the sweetener composition.

In one aspect of the present invention, rebaudioside A may be, for example, 100 to 10,000 ppm, 500 to 10,000 ppm, 1,000 to 10,000 ppm, 1,500 to 10,000 ppm, 2,000 to 10,000 ppm, 2,500 to 10,000 ppm, 3,000 to 10,000 ppm, 3,500 to 10,000 ppm, 4,000 to 10,000 ppm, 100 to 7,000 ppm, 500 to 7,000 ppm, 1,000 to 7,000 ppm, 1,500 to 7,000 ppm, 2,000 to 7,000 ppm, 2,500 to 7,000 ppm, 3,000 to 7,000 ppm, 3,500 to 7,000 ppm, 4,000 to 7,000 ppm, 100 to 5,000 ppm, 500 to 5,000 ppm, 1,000 to 5,000 ppm, 1,500 to 5,000 ppm, 2,000 to 5,000 ppm, 2,500 to 5,000 ppm, or 3,000 to 5,000 ppm with respect to the total weight of the sweetener composition.

In one aspect of the present invention, rebaudioside D may be, for example, 100 to 3,000 ppm, 300 to 3,000 ppm, 450 to 3,000 ppm, 500 to 3,000 ppm, 800 to 3,000 ppm, 1,000 to 3,000 ppm, 100 to 2,500 ppm, 300 to 2,500 ppm, 450 to 2,500 ppm, 500 to 2,500 ppm, 800 to 2,500 ppm, 1,000 to 2,500 ppm, 100 to 2,000 ppm, 300 to 2,000 ppm, 450 to 2,000 ppm, 500 to 2,000 ppm, 800 to 2,000 ppm, or 1,000 to 2,000 ppm with respect to the total weight of the sweetener composition.

In one aspect of the present invention, rebaudioside M may be, for example, 50 to 2,000 ppm, 100 to 2,000 ppm, 200 to 2,000 ppm, 300 to 2,000 ppm, 400 to 2,000 ppm, 500 to 2,000 ppm, 50 to 1,500 ppm, 100 to 1,500 ppm, 200 to 1,500 ppm, 300 to 1,500 ppm, 400 to 1,500 ppm, 500 to 1,500 ppm, 50 to 1,000 ppm, 100 to 1,000 ppm, 200 to 1,000 ppm, 300 to 1,000 ppm, 400 to 1,000 ppm, or 500 to 1,000 ppm with respect to the total weight of the sweetener composition.

In one aspect of the present invention, rebaudioside B may be, for example, 1,000 to 10,000 ppm, 2,000 to 10,000 ppm, 3,000 to 10,000 ppm, 3,500 to 10,000 ppm, 4,000 to 10,000 ppm, 4,500 to 10,000 ppm, 5,000 to 10,000 ppm, 1,000 to 8,000 ppm, 2,000 to 8,000 ppm, 3,000 to 8,000 ppm, 3,500 to 8,000 ppm, 4,000 to 8,000 ppm, 4,500 to 8,000 ppm, or 5,000 to 8,000 ppm with respect to the total weight of the sweetener composition.

In one aspect of the present invention, the sweetener composition may comprise a steviol glycoside other than the total steviol glycosides mentioned above. Examples of such a steviol glycoside include rebaudioside G, rebaudioside J, rebaudioside K, rebaudioside O, rebaudioside Q, rebaudioside R, dulcoside A, dulcoside C, rubusoside, steviol, steviol monoside, and steviol bioside.

In one aspect of the present invention, the sweetener composition comprises a flavor component. In a preferred aspect, the flavor component is a flavor component derived from a stevia extract. In the present specification, the "flavor component derived from a stevia extract" means a flavor component contained in an extract obtained by subjecting stevia to extraction by hydrothermal treatment. The flavor component contained in the sweetener composition can be derived from a stevia extract unless other flavor components are added thereto.

In one aspect of the present invention, the flavor component contained in the sweetener composition may be a Maillard reaction product of a stevia extract. In the present specification, the "Maillard reaction product of a stevia extract" means a product in reacting a steviol glycoside and/or reducing sugar contained in a stevia extract with an amine donor (e.g., amino compounds such as amino acids, peptides, and proteins) with high heat of higher than 100°C.

Examples of the flavor component contained in the sweetener composition include furaneol, hydroxymethylfurfural, furfural, vanillin, cyclotene, and damascenone.

In one aspect of the present invention, the sweetener composition comprises furaneol, and the furaneol content in the sweetener composition is 0.00005 to 0.035 wt% with respect to the solid content of the sweetener composition. In another aspect, the furaneol content may be, for example, 0.0001 to 0.035 wt%, 0.00015 to 0.035 wt%, 0.0002 to 0.035 wt%, 0.0005 to 0.035 wt%, 0.001 to 0.035 wt%, 0.003 to 0.035 wt%, 0.005 to 0.035 wt%, 0.007 to 0.035 wt%, 0.009 to 0.035 wt%, 0.01 to 0.035 wt%, 0.00005 to 0.030 wt%, 0.0001 to 0.03 wt%, 0.00015 to 0.03 wt%, 0.0002 to 0.03 wt%, 0.0005 to 0.03 wt%, 0.001 to 0.03 wt%, 0.003 to 0.03 wt%, 0.005 to 0.03 wt%, 0.007 to 0.03 wt%, 0.009 to 0.03 wt%, 0.01 to 0.03 wt%, 0.00005 to 0.028 wt%, 0.0001 to 0.028 wt%, 0.00015 to 0.028 wt%, 0.0002 to 0.028 wt%, 0.0005 to 0.028 wt%, 0.001 to 0.028 wt%, 0.003 to 0.028 wt%, 0.005 to 0.028 wt%, 0.007 to 0.028 wt%, 0.009 to 0.028 wt%, or 0.01 to 0.028 wt% with respect to the solid content of the sweetener composition. The flavor component can be quantified by a known method using a liquid chromatograph-mass spectrometer or a gas chromatograph-mass spectrometer. The amount of the flavor component with respect to the solid content of the sweetener composition can be calculated in the same manner as the aforementioned method for calculating the total steviol glycosides with respect to the solid content of the sweetener composition.

In one aspect of the present invention, the sweetener composition comprises hydroxymethylfurfural, and the hydroxymethylfurfural content in the sweetener composition may be, for example, 0.01 to 0.25 wt%, 0.02 to 0.25 wt%, 0.025 to 0.25 wt%, 0.03 to 0.25 wt%, 0.035 to 0.25 wt%, 0.04 to 0.25 wt%, 0.05 to 0.25 wt%, 0.06 to 0.25 wt%, 0.065 to 0.25 wt%, 0.07 to 0.25 wt%, 0.08 to 0.25 wt%, 0.1 to 0.25 wt%, 0.01 to 0.2 wt%, 0.02 to 0.2 wt%, 0.025 to 0.2 wt%, 0.03 to 0.2 wt%, 0.035 to 0.2 wt%, 0.04 to 0.2 wt%, 0.05 to 0.2 wt%, 0.06 to 0.2 wt%, 0.065 to 0.2 wt%, 0.07 to 0.2 wt%, 0.08 to 0.2 wt%, or 0.1 to 0.2 wt% with respect to the solid content of the sweetener composition.

In one aspect of the present invention, furaneol may be, for example, 0.1 to 30 ppm, 1.0 to 30 ppm, 1.5 to 30 ppm, 2.0 to 30 ppm, 2.5 to 30 ppm, 3.0 to 30 ppm, 3.5 to 30 ppm, 4.0 to 30 ppm, 4.5 to 30 ppm, 5.0 to 30 ppm, 5.5 to 30 ppm, 6.0 to 30 ppm, 6.5 to 30 ppm, 7.0 to 30 ppm, 7.5 to 30 ppm, 8.0 to 30 ppm, 8.5 to 30 ppm, 9.0 to 30 ppm, 10 to 30 ppm, 0.1 to 25 ppm, 1.0 to 25 ppm, 1.5 to 25 ppm, 2.0 to 25 ppm, 2.5 to 25 ppm, 3.0 to 25 ppm, 3.5 to 25 ppm, 4.0 to 25 ppm, 4.5 to 25 ppm, 5.0 to 25 ppm, 5.5 to 25 ppm, 6.0 to 25 ppm, 6.5 to 25 ppm, 7.0 to 25 ppm, 7.5 to 25 ppm, 8.0 to 25 ppm, 8.5 to 25 ppm, 9.0 to 25 ppm, or 10 to 25 ppm with respect to the total weight of the sweetener composition.

In one aspect of the present invention, hydroxymethylfurfural may be, for example, 0.1 to 200 ppm, 0.3 to 200 ppm, 1.0 to 200 ppm, 5.0 to 200 ppm, 10 to 200 ppm, 15 to 200 ppm, 20 to 200 ppm, 25 to 200 ppm, 30 to 200 ppm, 35 to 200 ppm, 40 to 200 ppm, 45 to 200 ppm, 50 to 200 ppm, 55 to 200 ppm, 60 to 200 ppm, 65 to 200 ppm, 70 to 200 ppm, 0.1 to 160 ppm, 0.3 to 160 ppm, 1.0 to 160 ppm, 5.0 to 160 ppm, 10 to 160 ppm, 15 to 160 ppm, 20 to 160 ppm, 25 to 160 ppm, 30 to 160 ppm, 35 to 160 ppm, 40 to 160 ppm, 45 to 160 ppm, 50 to 160 ppm, 55 to 160 ppm, 60 to 160 ppm, 65 to 160 ppm, or 70 to 160 ppm with respect to the total weight of the sweetener composition.

In one aspect of the present invention, the furaneol/total steviol glycoside weight ratio in the sweetener composition is 0.001 to 0.8. In another aspect, the furaneol/total steviol glycoside weight ratio in the sweetener composition may be, for example, 0.01 to 0.8, 0.015 to 0.8, 0.02 to 0.8, 0.025 to 0.8, 0.03 to 0.8, 0.035 to 0.8, 0.04 to 0.8, 0.045 to 0.8, 0.05 to 0.8, 0.001 to 0.5, 0.01 to 0.5, 0.015 to 0.5, 0.02 to 0.5, 0.025 to 0.5, 0.03 to 0.5, 0.035 to 0.5, 0.04 to 0.5, 0.045 to 0.5, 0.05 to 0.5, 0.001 to 0.25, 0.01 to 0.25, 0.015 to 0.25, 0.02 to 0.25, 0.025 to 0.25, 0.03 to 0.25, 0.035 to 0.25, 0.04 to 0.25, 0.045 to 0.25, 0.05 to 0.25, 0.001 to 0.2, 0.01 to 0.2, 0.015 to 0.2, 0.02 to 0.2, 0.025 to 0.2, 0.03 to 0.2, 0.035 to 0.2, 0.04 to 0.2, 0.045 to 0.2, 0.05 to 0.2, 0.001 to 0.1, 0.01 to 0.1, 0.015 to 0.1, 0.02 to 0.1, 0.025 to 0.1, 0.03 to 0.1, 0.035 to 0.1, 0.04 to 0.1, 0.045 to 0.1, or 0.05 to 0.1.

In one aspect of the present invention, the hydroxymethylfurfural/total steviol glycoside weight ratio in the sweetener composition may be, for example, 0.002 to 6.0, 0.01 to 6.0, 0.1 to 6.0, 0.2 to 6.0, 0.4 to 6.0, 0.002 to 3.0, 0.01 to 3.0, 0.1 to 3.0, 0.2 to 3.0, 0.4 to 3.0, 0.002 to 2.0, 0.01 to 2.0, 0.1 to 2.0, 0.2 to 2.0, 0.4 to 2.0, 0.002 to 1.5, 0.01 to 1.5, 0.1 to 1.5, 0.2 to 1.5, 0.4 to 1.5, 0.002 to 1.0, 0.01 to 1.0, 0.1 to 1.0, 0.2 to 1.0, or 0.4 to 1.0.

In one aspect of the present invention, the sweetener composition may be obtained by hydrothermally treating a stevia plant under conditions involving a reaction temperature of 130°C or higher and a severity parameter of 30 to 4000 calculated according to the expression (1) given below. In the present specification, the "stevia plant" encompasses the whole plant of the stevia plant and a portion of the plant. The "portion of the plant" encompasses leaves, stems, flowers, and roots of the stevia plant, and their arbitrary cuttings as well as cells and tissues of the stevia plant.

[Math. 2]

Severity parameter
$$R_o = \int_0^t \exp\left(\frac{T(t) - T_r}{\omega}\right) dt$$
Expression(1)

T(t): Time-dependent change in internal temperature of reaction container [°C]
Tr: Reference temperature (= 100°C)
ω: Constant (= 14.75)
t: Time (min)

The reaction temperature in the hydrothermal treatment is not particularly limited as long as the reaction temperature falls within a range that enables the severity parameter to be controlled to the range described above. The reaction temperature may be, for example, 130°C or higher, 135°C or higher, 140°C or higher, 145°C or higher, 150°C or higher, 155°C or higher, 160°C or higher, 165°C or higher, 170°C or higher, 175°C or higher, 180°C or higher, 185°C or higher, 190°C or higher, 195°C or higher, or 200°C or higher.

The upper limit of the reaction temperature can be, for example, 250°C or lower, 230°C or lower, or 210°C or lower as a guideline.

In one aspect of the present invention, the reaction time may be, for example, 1 to 120 minutes, 1 to 60 minutes, 1 to 30 minutes, 1 to 20 minutes, 5 to 120 minutes, 5 to 60 minutes, 5 to 30 minutes, or 5 to 20 minutes.

In one aspect of the present invention, the pressure during reaction can be a pressure at which the liquid pressure of a reaction liquid becomes a saturated steam pressure. In the present specification, the "reaction liquid" refers to a liquid present in a reaction vessel of a hydrothermal treatment apparatus, and can contain, for example, the stevia plant which is a starting material, a reaction solvent, a product, and an arbitrary catalyst. The saturated steam pressure differs depending on the reaction temperature and can be determined with reference to, for example, "Steam Tables" (1968) of The Japan Society of Mechanical Engineers.

In one aspect of the present invention, the severity parameter that is calculated according to the expression (1) can be controlled so as to be 30 to 4000, and in addition, may be, for example, 50 to 4000, 100 to 4000, 300 to 4000, 500 to 4000, 700 to 4000, 900 to 4000, 1000 to 4000, 30 to 3800, 50 to 3800, 100 to 3800, 300 to 3800, 500 to 3800, 700 to 3800, 900 to 3800, 1000 to 3800, 30 to 3600, 50 to 3600, 100 to 3600, 300 to 3600, 500 to 3600, 700 to 3600, 900 to 3600, 1000 to 3600, 30 to 3400, 50 to 3400, 100 to 3400, 300 to 3400, 500 to 3400, 700 to 3400, 900 to 3400, 1000 to 3400, 30 to 3200, 50 to 3200, 100 to 3200, 300 to 3200, 500 to 3200, 700 to 3200, 900 to 3200, 1000 to 3200, 30 to 3000, 50 to 3000, 100 to 3000, 300 to 3000, 500 to 3000, 700 to 3000, 900 to 3000, 1000 to 3000, 30 to 2800, 50 to 2800, 100 to 2800, 300 to 2800, 500 to 2800, 700 to 2800, 900 to 2800, 1000 to 2800, 30 to 2600, 50 to 2600, 100 to 2600, 300 to 2600, 500 to 2600, 700 to 2600, 900 to 2600, 1000 to 2600, 30 to 2400, 50 to 2400, 100 to 2400, 300 to 2400, 500 to 2400, 700 to 2400, 900 to 2400, or 1000 to 2400.

In one aspect of the present invention, the sweetener composition may be in a form such as a liquid form, a paste form, a powder form, or a granule form. In the case of a liquid form or a paste form, examples of the solvent include tap water, ion exchange water, soft water, and distilled water as well as degassed water obtained by the degassing treatment of such water.

In one aspect of the present invention, the sweetener composition may optionally contain a component other than the steviol glycoside and the flavor component without impairing the advantageous effects of the present invention. Examples of such a component include natural sweeteners such as fructose, sugar, fructose corn syrup, glucose, maltose, high-fructose corn syrup, sugar alcohol, oligosaccharide, honey, sugarcane juice (blackstrap molasses), starch syrup, luo han guo powders, luo han guo extracts, licorice powders, licorice extracts, *Thaumatococcus daniellii* seed powders, and *Thaumatococcus daniellii* seed extracts, and artificial sweeteners such as acesulfame potassium, sucralose, neotame, aspartame, and saccharin. Among them, a natural sweetener is preferably used from the viewpoint of conferring cleanliness, drinkability, a natural taste, and a moderate rich taste. Particularly, fructose, glucose, maltose, sucrose, or sugar is suitably used. The sweetener composition may contain only one of these sweeteners or may contain two or more thereof.

2. Food or drink product comprising sweetener composition

The present invention also relates to a food and drink comprising the sweetener composition mentioned above. The food and drink of the present invention are not particularly limited as long as the sweetener composition mentioned above may be contained therein. The food and drink mean a beverage and a food. Preferably, the food and drink are a beverage.

Examples of the food include confectionery products, bread products, cereal flours, noodles, rice products, agricultural or forestry processed foods, livestock processed foods, seafood processed foods, milk or dairy products, oil/fat or processed oil/fat products, seasonings, and other food ingredients.

Examples of the beverage include carbonated beverages, isotonic drinks, flavored water, fruit juice beverages, alcoholic beverages, nonalcoholic beverages, beer taste beverages such as beer and nonalcoholic beer, coffee beverages, tea beverages, cocoa beverages, nutritional beverages, and functional beverages. Examples of the carbonated beverage include sparkling beverages, cola, diet cola, ginger ale, cider, fruit juice flavor carbonated beverages, and carbonated water provided with fruit juice flavor.

In one aspect of the present invention, the amount of the sweetener composition blended into the beverage may be an amount such that the steviol glycoside in the beverage is, for example, 1 to 800 ppm, 20 to 750 ppm, 20 to 700 ppm, 20 to 650 ppm, 20 to 600 ppm, 20 to 550 ppm, 25 to 550 ppm, 30 to 550 ppm, 35 to 550 ppm, 40 to 550 ppm, 45 to 550 ppm, 50 to 550 ppm, 55 to 550 ppm, 20 to 540 ppm, 25 to 540 ppm, 30 to 540 ppm, 35 to 540 ppm, 40 to 540 ppm, 45 to 540 ppm, 50 to 540 ppm, 55 to 540 ppm, 20 to 530 ppm, 25 to 530 ppm, 30 to 530 ppm, 35 to 530 ppm, 40 to 530 ppm, 45 to 530 ppm, 50 to 530 ppm, 55 to 530 ppm, 20 to 520 ppm, 25 to 520 ppm, 30 to 520 ppm, 35 to 520 ppm, 40 to 520 ppm, 45 to 520 ppm, 50 to 520 ppm, 55 to 520 ppm, 20 to 510 ppm, 25 to 510 ppm, 30 to 510 ppm, 35 to 510 ppm, 40 to 510 ppm, 45 to 510 ppm, 50 to 510 ppm, 55 to 510 ppm, 20 to 505 ppm, 25 to 505 ppm, 30 to 505 ppm, 35 to 505 ppm, 40 to 505 ppm, 45 to 505 ppm, 50 to 505 ppm, 55 to 505 ppm, 20 to 500 ppm, 25 to 500 ppm, 30 to 500 ppm, 35 to 500 ppm, 40 to 500 ppm, 45 to 500 ppm, 50 to 500 ppm, 55 to 500 ppm, 20 to 495 ppm, 25 to 495 ppm, 30 to 495 ppm, 35 to 495 ppm, 40 to 495 ppm, 45 to 495 ppm, 50 to 495 ppm, 55 to 495 ppm, 20 to 490 ppm, 25 to 490 ppm, 30 to 490 ppm, 35 to 490 ppm, 40 to 490 ppm, 45 to 490 ppm, 50 to 490 ppm, 55 to 490 ppm, 100 to 500 ppm, 100 to 400 ppm, 150 to 400 ppm, 200 to 400 ppm, 250 to 400 ppm, 300 to 400 ppm, 100 to 150 ppm, 100 to 200 ppm, 100 to 250 ppm, or 100 to 300 ppm. When the content of the steviol glycoside falls within this range, moderate sweetness can be imparted to the beverage. In this case, the "amount of the steviol glycoside blended" may be the amount of the aforementioned total steviol glycosides or may be the amount of arbitrary one or more steviol glycosides included in the total steviol glycosides.

The sweetener composition may be blended into the beverage according to one aspect of the present invention such that the amount of a flavor component derived from a stevia extract falls within a range given below while the amount of the steviol glycoside is adjusted to the range described above. Specifically, the sweetener composition may be blended such that the amount of the flavor component is, for example, 0.1 to 300 ppm, 0.5 to 300 ppm, 1.0 to 300 ppm, 5.0 to 300 ppm, 10 to 300 ppm, 15 to 300 ppm, 20 to 300 ppm, 25 to 300 ppm, 30 to 300 ppm, 35 to 300 ppm, 40 to 300 ppm, 45 to 300 ppm, 50 to 300 ppm, 0.1 to 250 ppm, 0.5 to 250 ppm, 1.0 to 250 ppm, 5.0 to 250 ppm, 10 to 250 ppm, 15 to 250 ppm, 20 to 250 ppm, 25 to 250 ppm, 30 to 250 ppm, 35 to 250 ppm, 40 to 250 ppm, 45 to 250 ppm, 50 to 250 ppm, 0.1 to 200 ppm, 0.5 to 200 ppm, 1.0 to 200 ppm, 5.0 to 200 ppm, 10 to 200 ppm, 15 to 200 ppm, 20 to 200 ppm, 25 to 200 ppm, 30 to 200 ppm, 35 to 200 ppm, 40 to 200 ppm, 45 to 200 ppm, 50 to 200 ppm, 0.1 to 150 ppm, 0.5 to 150 ppm, 1.0 to 150 ppm, 5.0 to 150 ppm, 10 to 150 ppm, 15 to 150 ppm, 20 to 150 ppm, 25 to 150 ppm, 30 to 150 ppm, 35 to 150 ppm, 40 to 150 ppm, 45 to 150 ppm, 50 to 150 ppm, 0.1 to 100 ppm, 0.5 to 100 ppm, 1.0 to 100 ppm, 5.0 to 100 ppm, 10 to 100 ppm, 15 to 100 ppm, 20 to 100 ppm, 25 to 100 ppm, 30 to 100 ppm, 35 to 100 ppm, 40 to 100 ppm, 45 to 100 ppm, or 50 to 100 ppm. Examples of the flavor component derived from a stevia extract include furaneol, hydroxymethylfurfural, furfural, vanillin, cyclotene, and damascenone, one or more of which may be contained therein. When the content of the flavor component falls within this range, moderate sweetness and flavor can be imparted at the same time to the beverage. In a preferred aspect, the flavor may be roasted aroma.

In one aspect of the present invention, the beverage may contain a sweetener other than the steviol glycoside. Such a sweetener is not particularly limited, and the beverage may further contain one or more sweeteners selected from the group consisting of, for example, sucrose, fructose corn syrup, erythritol, mogroside V, corn syrup, aspartame (also called L-phenylalanine compound), sucralose, acesulfame potassium, saccharin, and xylitol. Among them, a natural sweetener is preferably used from the viewpoint of conferring cleanliness, drinkability, a natural taste, and a moderate rich taste. Particularly, fructose corn syrup, sucrose, or corn syrup is suitably used. Only one type of these sweet components may be used, or plural types thereof may be used. Such a sweetener may be contained in an amount that corresponds to Brix of, for example, 5.0 or less, 4.5 or less, 4.0 or less, 3.5 or less, 3.0 or less, 2.5 or less, 2.0 or less, 1.5 or less, 1.0 or less, or 0.5 or less, based on sucrose in the beverage, and the lower limit value may be 0.1 or more.

When the beverage is a sparkling beverage, the gas pressure may be 2.2 kgf/cm$^2$ to 5.0 kgf/cm$^2$. In some aspects, the gas pressure of the sparkling beverage may be, for example, 2.2 kgf/cm$^2$ to 4.5 kgf/cm$^2$, 2.2 kgf/cm$^2$ to 4.0 kgf/cm$^2$, 2.2 kgf/cm$^2$ to 3.5 kgf/cm$^2$, 2.2 kgf/cm$^2$ to 3.3 kgf/cm$^2$, 2.2 kgf/cm$^2$ to 3.2 kgf/cm$^2$, 2.3 kgf/cm$^2$ to 4.0 kgf/cm$^2$, 2.3 kgf/cm$^2$ to 3.5 kgf/cm$^2$, 2.3 kgf/cm$^2$ to 3.2 kgf/cm$^2$, 3.0 kgf/cm$^2$ to 4.0 kgf/cm$^2$, or 3.0 kgf/cm$^2$ to 3.5 kgf/cm$^2$. The content of the gas in the sparkling beverage can be determined by the gas pressure. In the present specification, the term "gas pressure" refers to the gas pressure of carbon dioxide gas in the beverage after the liquid temperature of the sparkling beverage in a container is set to 20°C, followed by the atmospheric relief of air in a headspace (snift) once, unless otherwise specified. The gas pressure can be measured by fixing the beverage with its liquid temperature set to 20°C to a gas internal pressure meter, once draining carbon dioxide gas in a headspace by atmospheric relief through the opening of a stopper cock of the gas internal pressure meter and then closing again the stopper cock, and reading a value at which an indicator reaches a certain position during shaking and moving of the gas internal pressure meter.

In the present specification, the gas pressure of the sparkling beverage is measured by use of this method, unless otherwise specified.

The Brix based on sucrose of the beverage is not particularly limited and is preferably 1 to 15, more preferably 3 to 14, further preferably 5 to 13, particularly preferably 7 to 11. The Brix can be calculated from a known degree of sweetness of each sweetener such as a steviol glycoside relative to sucrose and the content of each sweetener. The relative ratio of the sweetness of each sweetener to the sweetness of sucrose defined as 1 can be determined from, for example, a known sugar sweetness conversion table (e.g., information "Beverage term dictionary", page 11, Beverage Japan, Inc.). As for a sweetener whose sweetness value is described as a numeric range or differs among literatures, the relative ratio of the sweetness to the sweetness of sucrose defined as 1 can be determined by a sensory test. Examples of such a sensory test include a method of adding sugar to pure water so that Brix is from 3.0 to 5.0 by 0.5 to prepare samples, and selecting therefrom a sugar-supplemented sample having a sweetness intensity equivalent to that of an aqueous solution having a predetermined concentration of a sweetener.

The beverage may contain an alcohol. Although an alcoholic beverage is a beverage containing an alcohol, the alcohol determined in this context means ethyl alcohol (ethanol), as mentioned above, unless otherwise specified. The alcoholic beverage is not particularly limited by its type as long as an alcohol is contained therein. The alcoholic beverage may be a beverage having an alcohol content of 0.05 to 40 v/v%, 1.0 to 10 v/v%, 2.0 to 9.0 v/v%, or 3.0 to 8.0 v/v%, such as beer, sparkling liquor, Chuhai (shochu mixed with soda water), or cocktail, or may be a beverage having an alcohol content of less than 0.05 v/v%, such as nonalcoholic beer, a Chuhai taste beverage, or a soft beverage. In some aspects, the beverage preferably has an alcohol content of less than 0.05 v/v%, more preferably 0.00 v/v%. In the present specification, the alcohol content is expressed by a percentage based on volume/volume (v/v%). The alcohol content in the beverage can be measured by any known method, and can be measured with, for example, an oscillating densitometer.

The flavor of the beverage is not particularly limited and can be adjusted to various flavors. For example, the beverage may be an orange-flavored, lemon-flavored, lime-flavored, grape-flavored, ginger ale-flavored, cassis-flavored, green tea-flavored, oolong tea-flavored, English tea-flavored, coffee-flavored, or cola-flavored beverage. The flavor of the beverage of the present invention can be adjusted by adding a component that is approved as a food additive such as a fruit juice, an acidulant, a flavor, plant extracts, a dairy product, and other flavor, or a component that, even if not approved, has been eaten since early times and is generally recognized to be safe.

The beverage may be supplemented with various additives without impairing the advantageous effects of the present invention. Examples of such an additive can include acidulants, fragrances, vitamins, dyes, antioxidants, emulsifiers, preservatives, seasonings, extracts, pH adjusters, and quality stabilizers.

The energy (total energy) of the beverage is not particularly limited and may be, for example, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml.

The beverage may be heat-sterilized and prepared as a packaged beverage in a state packed in a container. Examples of the container can include, but are not particularly limited to, PET bottles, aluminum cans, steel cans, paper packages, chilled cups, and bottles. In the case of performing heat sterilization, the type thereof is not particularly limited, and the heat sterilization can be performed by use of a usual approach, for example, UHT sterilization or retort sterilization. The temperature of the heat sterilization step is not particularly limited and is, for example, 65 to 130°C, preferably 85 to 120°C, for 10 to 40 minutes. However, sterilization at an appropriate temperature for several seconds, for example, 5 to 30 seconds, is acceptable as long as a sterilization value equivalent to that obtained under the conditions described above can be obtained.

A method for producing the food and drink is not particularly limited as long as the food and drink containing each component described above can be obtained. One aspect of the present invention provides a method for producing the food and drink, comprising: obtaining a sweetener composition comprising a steviol glycoside and a flavor component; and adding the sweetener composition to the food and drink or a starting material thereof. Obtaining a sweetener composition comprising a steviol glycoside and a flavor component is as described in the section "1. Sweetener composition comprising steviol glycoside and flavor component". Adding the sweetener composition to the food and drink or a starting material thereof can be performed by an arbitrary step in the process of producing the food and drink and may be performed, for example, when starting materials of the food and drink are mixed or when the quality of taste of the food and drink is finally adjusted.

3. Method for imparting sweetness and flavor to food and drink

The present invention also relates to a method for imparting sweetness and flavor to a food and drink. Specifically, the present invention relates to a method for imparting sweetness and flavor to a food and drink, comprising blending the sweetener composition mentioned in the section "1. Sweetener composition comprising steviol glycoside and flavor component" into the food and drink (e.g., a beverage). The composition is as described in the section "1. Sweetener composition comprising steviol glycoside and flavor component". The method according to one aspect of the present invention can impart moderate sweetness and flavor at the same time to the food and drink by blending the composition into the food and drink. In a preferred aspect, the flavor may be roasted aroma.

Blending the composition into the food and drink may be performed, for example, by blending the composition into the food and drink or a starting material thereof when starting materials of the food and drink are mixed or when the quality of taste of the food and drink is finally adjusted, as described in the section "2. Food or drink product comprising sweetener composition".

In one aspect of the present invention, the amount of the sweetener composition of the present invention blended into the food and drink is not particularly limited and can be appropriately set within a range that achieves both the desired sweetness and flavor. The amount of the sweetener composition blended also differs depending on the type of the food and drink. In the case of a beverage, the amount of the sweetener composition blended can be set such that the concentrations of the steviol glycoside and the flavor component in the beverage are the same as those described in the section "2. Food or drink product comprising sweetener composition".

4. Sweetness- and flavor-imparting agent for food and drink

The present invention also relates to a sweetness- and flavor-imparting agent for food and drinks. The present invention may provide a composition for imparting sweetness and flavor to food and drinks. In the present specification, the "sweetness- and flavor-imparting agent" or the "composition for imparting sweetness or flavor" means a substance that imparts sweetness and flavor at the same time to a food and drink (e.g., a beverage) when added to the food and drink. In the present specification, description about the sweetness- and flavor-imparting agent holds true for the composition for imparting sweetness and flavor. The sweetness- and flavor-imparting agent can preferably impart sweetness and flavor in a moderately balanced manner to a food and drink when added to the food and drink.

In one aspect of the present invention, the sweetness- and flavor-imparting agent comprises the sweetener composition mentioned in the section "1. Sweetener composition comprising steviol glycoside and flavor component".

In one aspect of the present invention, the sweetness- and flavor-imparting agent may be in a form such as a liquid form, a paste form, a powder form, or a granule form.

In one aspect of the present invention, the content of the sweetener composition of the present invention contained in the sweetness- and flavor-imparting agent may be, for example, 30 to 100 wt%, 40 to 99 wt%, 50 to 98 wt%, 60 to 97 wt%, 70 to 96 wt%, or 80 to 95 wt% with respect to the total weight of the sweetness- and flavor-imparting agent. In some aspects, the sweetness- and flavor-imparting agent consists substantially of a steviol glycoside and a flavor component derived from a stevia extract. In the present specification, the phrase "consist substantially of a steviol glycoside and a flavor component derived from a stevia extract" means that other impurities inevitably contained in the course of production of the sweetener composition of the present invention may be contained in the sweetness- and flavor-imparting agent. For example, 5 wt% or less, 4 wt% or less, 3 wt% or less, 2 wt% or less, 1.5 wt% or less, 1.0 wt% or less, or 0.5 wt% or less of impurities may be contained with respect to the total weight of the sweetness- and flavor-imparting agent.

In some aspects, the sweetness- and flavor-imparting agent may contain a component other than the sweetener composition of the present invention. Examples of such a component include sweeteners. Examples of the sweetener include natural sweeteners such as fructose, sugar, fructose corn syrup, glucose, maltose, high-fructose corn syrup, sugar alcohol, oligosaccharide, honey, sugarcane juice (blackstrap molasses), starch syrup, luo han guo powders, luo han guo extracts, licorice powders, licorice extracts, *Thaumatococcus daniellii* seed powders, and *Thaumatococcus daniellii* seed extracts, and artificial sweeteners such as acesulfame potassium, sucralose, neotame, aspartame, and saccharin. Among them, a natural sweetener is preferably used from the viewpoint of conferring cleanliness, drinkability, a natural taste, and a moderate rich taste. Particularly, fructose, glucose, maltose, sucrose, or sugar is suitably used. The sweetness- and flavor-imparting agent may contain only one of these sweeteners or may contain two or more thereof.

[Exemplary embodiments]

One aspect of the present invention provides a sweetener composition comprising a steviol glycoside and a flavor component, wherein

the total content of rebaudioside A, rebaudioside D, and rebaudioside M is 15 to 80 wt% with respect to the total steviol glycoside content,
the flavor component comprises furaneol,
the total steviol glycosides consist of rebaudioside A, rebaudioside B, rebaudioside C, rebaudioside D, rebaudioside E, rebaudioside F, rebaudioside I, rebaudioside M, rebaudioside N, and stevioside, and
a furaneol/total steviol glycoside weight ratio is 0.001 to 0.8.

In this aspect, the total content of rebaudioside A, rebaudioside D, and rebaudioside M may be, for example, 15 to 60 wt%, 20 to 60 wt%, 20 to 55 wt%, or 20 to 50 wt%. In this aspect, the furaneol/total steviol glycoside weight ratio may be, for example, 0.02 to 0.5, 0.04 to 0.5, 0.05 to 0.5, 0.02 to 0.25, 0.04 to 0.25, 0.05 to 0.25, 0.02 to 0.2, 0.04 to 0.2, 0.05 to 0.2, 0.02 to 0.1, 0.04 to 0.1, or 0.05 to 0.1.
One aspect of the present invention provides a sweetener composition comprising a steviol glycoside and a flavor component, wherein

the total content of rebaudioside A, rebaudioside D, and rebaudioside M is 15 to 80 wt% with respect to the total steviol glycoside content,
the flavor component comprises hydroxymethylfurfural,
the total steviol glycosides consist of rebaudioside A, rebaudioside B, rebaudioside C, rebaudioside D, rebaudioside E, rebaudioside F, rebaudioside I, rebaudioside M, rebaudioside N, and stevioside, and
a hydroxymethylfurfural/total steviol glycoside weight ratio is 0.002 to 6.0.

In this aspect, the total content of rebaudioside A, rebaudioside D, and rebaudioside M may be, for example, 15 to 60 wt%, 20 to 60 wt%, 20 to 55 wt%, or 20 to 50 wt%. In this aspect, the hydroxymethylfurfural/total steviol glycoside weight ratio may be, for example, 0.1 to 2.0, 0.2 to 2.0, 0.4 to 2.0, 0.1 to 1.5, 0.2 to 1.5, 0.4 to 1.5, 0.1 to 1.0, 0.2 to 1.0, or 0.4 to 1.0.
One aspect of the present invention provides a sweetener composition comprising a steviol glycoside and a flavor component, wherein

the total content of rebaudioside A, rebaudioside D, and rebaudioside M is 15 to 80 wt% with respect to the total steviol glycoside content,
the flavor component comprises furaneol and hydroxymethylfurfural,
the total steviol glycosides consist of rebaudioside A, rebaudioside B, rebaudioside C, rebaudioside D, rebaudioside E, rebaudioside F, rebaudioside I, rebaudioside M, rebaudioside N, and stevioside,
a furaneol/total steviol glycoside weight ratio is 0.001 to 0.8, and
a hydroxymethylfurfural/total steviol glycoside weight ratio is 0.002 to 6.0.

In this aspect, the total content of rebaudioside A, rebaudioside D, and rebaudioside M may be, for example, 15 to 60 wt%, 20 to 60 wt%, 20 to 55 wt%, or 20 to 50 wt%. In this aspect, the furaneol/total steviol glycoside weight ratio may be, for example, 0.02 to 0.5, 0.04 to 0.5, 0.05 to 0.5, 0.02 to 0.25, 0.04 to 0.25, 0.05 to 0.25, 0.02 to 0.2, 0.04 to 0.2, 0.05 to 0.2, 0.02 to 0.1, 0.04 to 0.1, or 0.05 to 0.1. In this aspect, the hydroxymethylfurfural/total steviol glycoside weight ratio may be, for example, 0.1 to 2.0, 0.2 to 2.0, 0.4 to 2.0, 0.1 to 1.5, 0.2 to 1.5, 0.4 to 1.5, 0.1 to 1.0, 0.2 to 1.0, or 0.4 to 1.0.
One aspect of the present invention provides a sweetener composition comprising a steviol glycoside and a flavor component, wherein

the total content of rebaudioside A, rebaudioside D, and rebaudioside M is 15 to 80 wt% with respect to the total steviol glycoside content, and the sweetener composition comprises rebaudioside B at a ratio of 1 to 85 wt%,
the flavor component comprises one or more selected from the group consisting of furaneol, hydroxymethylfurfural, furfural, vanillin, cyclotene, and damascenone, and
the total steviol glycosides consist of rebaudioside A, rebaudioside B, rebaudioside C, rebaudioside D, rebaudioside E, rebaudioside F, rebaudioside I, rebaudioside M, rebaudioside N, and stevioside.

In this aspect, the total content of rebaudioside A, rebaudioside D, and rebaudioside M may be, for example, 15 to 60 wt%, 20 to 60 wt%, 20 to 55 wt%, or 20 to 50 wt% with respect to the total steviol glycoside content. In this aspect, the content of rebaudioside B may be, for example, 15 to 85 wt%, 30 to 85 wt%, 40 to 85 wt%, 15 to 80 wt%, 30 to 80 wt%, 40 to 80 wt%, 15 to 75 wt%, 30 to 75 wt%, or 40 to 75 wt% with respect to the total steviol glycoside content.

One aspect of the present invention provides a sweetener composition comprising a steviol glycoside and a flavor component, wherein

the total content of rebaudioside A, rebaudioside D, and rebaudioside M is 15 to 80 wt% with respect to the total steviol glycoside content,
the flavor component comprises one or more selected from the group consisting of furaneol, hydroxymethylfurfural, furfural, vanillin, cyclotene, and damascenone,
the total steviol glycosides consist of rebaudioside A, rebaudioside B, rebaudioside C, rebaudioside D, rebaudioside E, rebaudioside F, rebaudioside I, rebaudioside M, rebaudioside N, and stevioside, and
the sweetener composition is obtained by hydrothermally treating a stevia plant under conditions involving a reaction temperature of 130°C or higher and a severity parameter of 30 to 4000 calculated according to the expression (1) given below. In this aspect, the severity parameter may be, for example, 100 to 4000, 500 to 4000, 1000 to 4000, 30 to 3000, 100 to 3000, 500 to 3000, 1000 to 3000, 30 to 2400, 100 to 2400, 500 to 2400, or 1000 to 2400.
[Math. 3]

$$\text{Severity parameter} \qquad R_o = \int_0^t \exp\left(\frac{T(t) - T_r}{\omega}\right) dt \qquad \text{Expression (1)}$$

T(t): Time-dependent change in internal temperature of reaction container [°C]
Tr: Reference temperature (= 100°C)
ω: Constant (= 14.75)
t: Time (min)

Examples

Hereinafter, the present invention will be described in more detail with reference to Examples. However, the contents of the present invention are not limited thereby.

[Production Example]

A ground product of dry stevia leaves (water content: 10 wt% or less) was used as a starting material and subjected to hydrothermal reaction treatment using the following procedures and conditions.

In general, a reaction temperature and a reaction time are set as to conditions for hydrothermal reaction. However, for application to an industrial process, it is difficult to precisely control, from the outside, a reaction temperature and reaction time in an actual reaction field. Therefore, a severity parameter ($R_0$) calculated according to the following expression (1) was used as a control parameter.
[Math. 4]

$$\text{Severity parameter} \qquad R_o = \int_0^t \exp\left(\frac{T(t) - T_r}{\omega}\right) dt \qquad \text{Expression (1)}$$

T(t): Time-dependent change in internal temperature of reaction container [°C]
Tr: Reference temperature (= 100°C)
ω: Constant (= 14.75)
t: Time (min)

The severity parameter is a parameter obtained by converting the history of heat and a time received by a starting material under hydrothermal reaction conditions of 100°C or higher to an energy value. Provided that the severity parameter is constant, variation in reaction temperature can be adjusted with a reaction time while variation in reaction time can be adjusted with a reaction temperature. When the severity parameter is successfully introduced, data obtained in a small-capacity batch-type hydrothermal reactor that can give precise reaction conditions at a laboratory level can be applied to the reaction control of an industrial continuous hydrothermal reaction apparatus.

A batch-type hydrothermal reactor (internal capacity: 35 ml) made of SUS316 was charged with 3.4 g of the ground product of stevia leaves, and after addition of 25 g of ion exchange water, also charged with a temperature sensor. This reactor was dipped in salt baths with temperature levels of 130, 160, 170, 180, and 190°C. Hydrothermal reaction treatment corresponding to 0 to 4500 in terms of a severity parameter was performed for a reaction time of 0 to 20 minutes. The reaction container was rapidly cooled in cold water. Then, the product was separated and analyzed. The internal temperature history of the reactor was actually measured with the inserted temperature sensor. The severity parameter received by the sample was monitored at real time using a commercially available data logger.

[Example A] Evaluation of degradation behavior of steviol glycoside

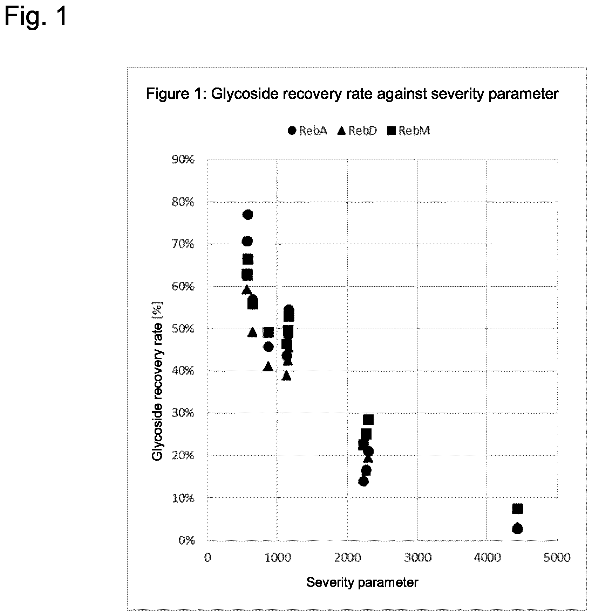

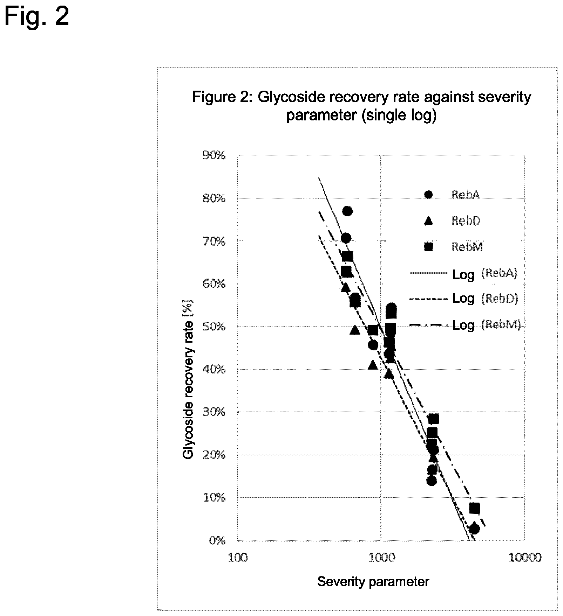

The concentration of each steviol glycoside obtained through hydrothermal reaction was measured by liquid chromatography-mass spectrometry (LC/MSMS). For measurement, SecurityGuard(TM) Ultra AJ0-9502 C18 for 2.1 mm ID guard column manufactured by Phenomenex Inc. and Shim-pack XR-ODSII (2.0 × 150 mm) column manufactured by Shimadzu Corp. were applied to M8050 (UPLC: Nexera) manufactured by Shimadzu Corp.
30% (v/v) acetonitrile was used in sample dilution. An isocratic liquid feed mode was selected under conditions involving an injection volume of 1 μL and a column oven temperature of 40°C. A mixed liquid of ultrapure water and 0.1% (v/v) formic acid was fed as mobile phase A at 0.34 ml/min, and the acetonitrile was fed as mobile phase B at 0.16 ml/min. The detection time was 13 minutes. Figure 1 shows the degradation behavior of the steviol glycoside against a severity parameter as to samples except for Example 2. Figure 2 shows a graph indicating the severity parameter of Figure 1 in log as to samples except for Examples 1 and 2. Tables 1 to 3 show reaction conditions related to each level measured and analysis results of the steviol glycoside. In Figures 1 and 2, the "glycoside recovery rate" on the ordinate is a recovery rate when a recovery rate in the hot water extraction of a stevia plant was defined as 100%. Example 1 is a sample subjected to hot water extraction using ion exchange water without hydrothermal treatment.

[Table 1]

| Table 1: Experimental level | | | | |
|---|---|---|---|---|
| Example | Reaction temperature (°C) | Reaction time (min) | Severity parameter (actual performance) | Brix |
| 1 | 60 | 60 | 0 | 7.07 |
| 2 | 130 | 5 | 41 | 8.58 |
| 3 | 170 | 5 | 569 | 9.70 |
| 4 | 160 | 10 | 582 | 9.71 |
| 5 | 180 | 3 | 655 | 9.64 |
| 6 | 190 | 2 | 871 | 9.86 |
| 7 | 180 | 5 | 1133 | 9.67 |
| 8 | 170 | 10 | 1157 | 9.64 |
| 9 | 160 | 20 | 1168 | 9.75 |
| 10 | 190 | 5 | 2235 | 8.71 |
| 11 | 180 | 10 | 2270 | 8.75 |
| 12 | 170 | 20 | 2301 | 9.04 |
| 13 | 190 | 10 | 4436 | 8.08 |

[Table 2]

| Table 2: Ratio of each steviol glycoside to total steviol glycoside | | | | | | | | | | |
|---|---|---|---|---|---|---|---|---|---|---|
| Example | Steviol glycoside (%) | | | | | | | | | |
| | RebA | RebB | RebC | RebD | RebE | RebF | RebM | RebN | RebI | Stevioside |
| 1 | 52 | 1 | 5 | 19 | 1 | 1 | 7 | 3 | 0 | 9 |
| 2 | 56 | 2 | 4 | 14 | 1 | 2 | 8 | 3 | 0 | 10 |
| 3 | 40 | 25 | 4 | 12 | 1 | 1 | 5 | 3 | 0 | 9 |

(continued)

| Table 2: Ratio of each steviol glycoside to total steviol glycoside | | | | | | | | | | |
|---|---|---|---|---|---|---|---|---|---|---|
| Example | Steviol glycoside (%) | | | | | | | | | |
| | RebA | RebB | RebC | RebD | RebE | RebF | RebM | RebN | RebI | Stevioside |
| 4 | 42 | 23 | 4 | 12 | 1 | 1 | 5 | 3 | 0 | 9 |
| 5 | 33 | 37 | 3 | 11 | 1 | 1 | 5 | 3 | 0 | 7 |
| 6 | 27 | 47 | 2 | 9 | 0 | 1 | 4 | 3 | 0 | 6 |
| 7 | 27 | 48 | 2 | 9 | 0 | 1 | 4 | 3 | 0 | 6 |
| 8 | 29 | 43 | 3 | 9 | 0 | 1 | 4 | 3 | 0 | 7 |
| 9 | 32 | 40 | 3 | 10 | 1 | 1 | 4 | 3 | 0 | 7 |
| 10 | 14 | 69 | 1 | 5 | 0 | 0 | 3 | 3 | 1 | 3 |
| 11 | 13 | 72 | 1 | 5 | 0 | 0 | 3 | 2 | 0 | 3 |
| 12 | 16 | 66 | 1 | 5 | 0 | 0 | 3 | 2 | 0 | 4 |
| 13 | 6 | 82 | 0 | 3 | 0 | 0 | 2 | 3 | 1 | 2 |

[Table 3]

| Table 3: Steviol glycoside concentration in liquid extract after hydrothermal treatment | | | | | | | | | | | |
|---|---|---|---|---|---|---|---|---|---|---|---|
| Example | Steviol glycoside (ppm) | | | | | | | | | | |
| | RebA | RebB | RebC | RebD | RebE | RebF | RebM | RebN | RebI | Stevioside | TSG[1) |
| 1 | 6566 | 161 | 582 | 2401 | 115 | 171 | 926 | 433 | 48 | 1163 | 12566 |
| 2 | 8545 | 321 | 672 | 2146 | 116 | 299 | 1152 | 467 | 53 | 1536 | 15307 |
| 3 | 6089 | 3866 | 572 | 1865 | 93 | 157 | 765 | 434 | 60 | 1347 | 15248 |
| 4 | 6528 | 3618 | 626 | 1941 | 98 | 171 | 796 | 440 | 61 | 1452 | 15730 |
| 5 | 4769 | 5220 | 437 | 1511 | 77 | 119 | 661 | 393 | 59 | 1047 | 14294 |
| 6 | 3737 | 6473 | 335 | 1227 | 63 | 92 | 568 | 359 | 56 | 823 | 13734 |
| 7 | 3671 | 6466 | 334 | 1200 | 62 | 90 | 552 | 353 | 56 | 825 | 13609 |
| 8 | 4142 | 6091 | 381 | 1320 | 67 | 103 | 597 | 370 | 58 | 930 | 14059 |
| 9 | 4623 | 5839 | 430 | 1407 | 73 | 115 | 635 | 387 | 58 | 1044 | 14611 |
| 10 | 1184 | 5777 | 97 | 449 | 26 | 26 | 271 | 222 | 47 | 280 | 8380 |
| 11 | 1415 | 7742 | 120 | 509 | 29 | 32 | 300 | 244 | 49 | 333 | 10773 |
| 12 | 1846 | 7508 | 161 | 620 | 35 | 42 | 350 | 268 | 50 | 431 | 11311 |
| 13 | 238 | 3070 | 17 | 102 | 8 | 5 | 91 | 106 | 30 | 64 | 3731 |
| **1) In the table, TSG means total steviol glycosides and is the sum of RebA, RebB, RebC, RebD, RebE, RebF, RebI, RebM, RebN, and Stevioside.** | | | | | | | | | | | |

As shown in Figure 1, the recovery rates of RebA, RebD, and RebM were found to depend on the severity parameter at any level of the reaction temperature. As shown in Figure 2, the yield of each steviol glycoside was in a straight-line relationship to the severity parameter and was found to exhibit a linear relationship to the reaction energy, irrespective of the reaction temperature.

This result suggested that a steviol glycoside eluted from a stevia plant with elevation in severity parameter is hydrolyzed. As logarithmically approximated, the yield of the steviol glycoside was in a linear relationship to the severity parameter (log) and maintained a linear relationship to the reaction energy, irrespective of the level of the reaction temperature.

[Example B] Evaluation of production behavior of flavor component

The production behaviors of furaneol and hydroxymethylfurfural were evaluated using LC/MSMS. For measurement, SecurityGuard(TM) Ultra AJ0-9502 C18 for 2.1 mm ID guard column manufactured by Phenomenex Inc. and Shim-pack XR-ODSII (2.0 × 150 mm) column manufactured by Shimadzu Corp. were applied to M8050 (UPLC: Nexera) manufactured by Shimadzu Corp.

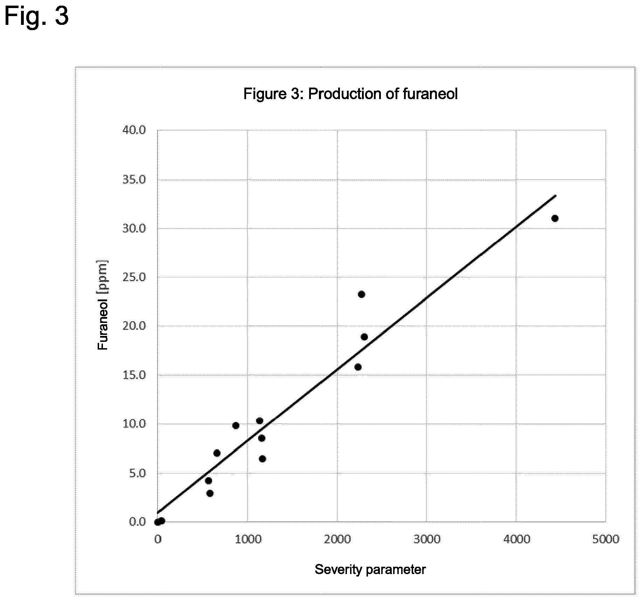

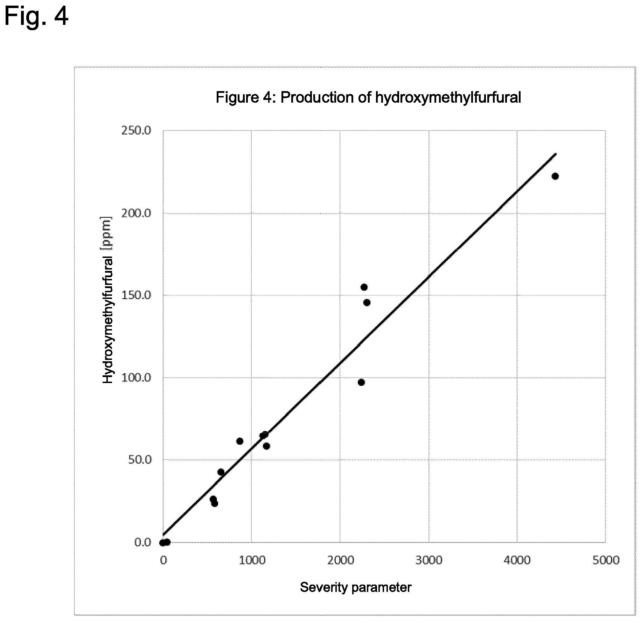

30% (v/v) acetonitrile was used in sample dilution. A binary gradient liquid feed mode was selected under conditions involving an injection volume of 1 μL and a column oven temperature of 40°C. A mixed liquid of ultrapure water and 0.1% (v/v) formic acid was fed as mobile phase A at 0.5 ml/min, and the acetonitrile was fed as mobile phase B at 0.5 ml/min. The detection time was 12 minutes. The results are shown in Figures 3 and 4. Table 4 shows the respective concentrations of furaneol and hydroxymethylfurfural.

The behavior of each flavor component produced through hydrothermal reaction was also evaluated by gas chromatography-mass spectrometry (GC/MS). Sample introduction was performed by dynamic head space (DHS), and the flavor component was measured under the conditions shown in Table 5. The conditions for hydrothermal reaction of each sample measured were the same as those shown in Table 1. Table 6 shows a peak area ratio (ISTD ratio, 10-fold dilution) to an internal standard of each flavor component measured.

[Table 4]

| Table 4: Concentrations of furaneol and hydroxymethylfurfural | | |
|---|---|---|
| Example | Flavor component (ppm) | |
| | Furaneol | Hydroxymethylfurfural |
| 1 | 0 | 0 |
| 2 | 0.1 | 0.3 |
| 3 | 4.2 | 26.4 |
| 4 | 2.9 | 23.9 |
| 5 | 7.0 | 42.6 |
| 6 | 9.8 | 61.5 |
| 7 | 10.3 | 64.8 |
| 8 | 8.5 | 65.8 |
| 9 | 6.4 | 58.5 |
| 10 | 15.9 | 97.2 |
| 11 | 23.2 | 154.9 |
| 12 | 18.9 | 145.5 |
| 13 | 31.0 | 222.3 |

[Table 5]

| Table 5: GC/MS measurement conditions | |
|---|---|
| Apparatus | Agilent 7890A |
| Tube | Tenax TA (manufactured by GL Sciences Inc.) |
| Sample temperature | 80°C |
| Trap temperature | 40°C |
| Dry purge | None |
| Detection time | 30 min |

(continued)

| Table 5: GC/MS measurement conditions | |
|---|---|
| Flow rate | 100 mL/min |
| Thermal desorption | 30°C → 300°C (rate: 720°C/min), retention time: 3 min |

[Table 6]

| Table 6: Analysis results of each flavor component | | | | | | |
|---|---|---|---|---|---|---|
| Example | Flavor component (ISTD ratio) | | | | | |
| | Furaneol | Hydroxymethylfurfural | Furfural | Vanillin | Cyclotene | Damascenone |
| 1 | 0.15 | 0.02 | 0.05 | 0.06 | 0.40 | 0.16 |
| 2 | - | - | - | - | - | - |
| 3 | 0.22 | 0.08 | 2.28 | 0.06 | 0.30 | 0.21 |
| 4 | 0.15 | 0.11 | 2.14 | 0.06 | 0.22 | 0.17 |
| 5 | 0.33 | 0.11 | 3.11 | 0.07 | 0.71 | 0.37 |
| 6 | 0.52 | 0.18 | 5.44 | 0.09 | 1.27 | 0.62 |
| 7 | 0.43 | 0.17 | 5.03 | 0.08 | 0.86 | 0.44 |
| 8 | 0.42 | 0.28 | 4.55 | 0.08 | 0.72 | 0.37 |
| 9 | 0.37 | 0.20 | 4.00 | 0.09 | 0.56 | 0.31 |
| 10 | 1.16 | 0.38 | 12.13 | 0.11 | 2.19 | 0.96 |
| 11 | 1.07 | 0.37 | 11.88 | 0.11 | 2.00 | 0.88 |
| 12 | 0.94 | 0.42 | 9.64 | 0.10 | 1.56 | 0.68 |
| 13 | 1.80 | 0.79 | 25.38 | 0.12 | 3.82 | 1.59 |
| * "-" represents unmeasured. | | | | | | |

As shown in Figures 3 and 4, the production of furaneol and hydroxymethylfurfural was found to increase depending on the severity parameter. This result suggested that a steviol glycoside and/or reducing sugar eluted from a stevia plant with elevation in severity parameter causes Maillard reaction with an amine donor such as a protein to obtain a flavor component derived from the Maillard reaction.

[Example C] Sensory evaluation of sweetness and flavor

The sweetener composition according to the present invention was evaluated for its sweetness and flavor using liquid extracts with the levels shown in Table 7 which differed in severity parameter from each other. All the levels shown in Table 7 were the same as those used in Examples A and B. The liquid extract related to each level was diluted 50-fold (based on weight) with ion exchange water to prepare a sample for sensory evaluation. Each sample was evaluated by four sensory trained persons as panelists according to criteria given below. The evaluation was performed by sip and spit, and each panelist carried out the evaluation by rinsing the mouth four or more times before sipping each sample. Tables 8 and 9 show evaluation results of two items, sweetness and roasted aroma, respectively.

[Table 7]

| Table 7: Experimental level | |
|---|---|
| Example | Severity parameter |
| 2 | 38 |
| 4 | 584 |

(continued)

| Table 7: Experimental level | |
|---|---|
| Example | Severity parameter |
| 8 | 1151 |
| 11 | 2267 |
| 13 | 4466 |

Evaluation criteria

Score 1: No sweetness or roasted aroma was perceived.

Score 2: Sweetness or roasted aroma was slightly perceived.

Score 3: Sweetness or roasted aroma was strongly perceived.

[Table 8]

| Table 8: Evaluation results of sweetness | | | | |
|---|---|---|---|---|
| Example | Score (the number of panelists) | | | The number of panelists who gave score of 2 or higher |
| | 1 | 2 | 3 | |
| 2 | 0 | 1 | 3 | 4 |
| 4 | 1 | 1 | 2 | 3 |
| 8 | 1 | 3 | 0 | 3 |
| 11 | 0 | 3 | 1 | 4 |
| 13 | 2 | 2 | 0 | 2 |

[Table 9]

| Table 9: Evaluation results of roasted aroma | | | | |
|---|---|---|---|---|
| Example | Score (the number of panelists) | | | The number of panelists who gave score of 2 or higher |
| | 1 | 2 | 3 | |
| 2 | 1 | 2 | 1 | 3 |
| 4 | 0 | 2 | 2 | 4 |
| 8 | 0 | 1 | 3 | 4 |
| 11 | 0 | 0 | 4 | 4 |
| 13 | 0 | 0 | 4 | 4 |

From this result, the samples of Examples 2, 4, 8, and 11 were confirmed to be provided with both sweetness and roasted aroma.

**Claims**

1. A sweetener composition comprising a steviol glycoside and a flavor component, wherein

the total content of rebaudioside A, rebaudioside D, and rebaudioside M is 15 to 80 wt% with respect to the total steviol glycoside content, and

the flavor component comprises one or more selected from the group consisting of furaneol, hydroxymethylfurfural, furfural, vanillin, cyclotene, and damascenone.

2.  The sweetener composition according to claim 1, wherein the flavor component comprises furaneol, and a furaneol content in the sweetener composition is 0.00005 to 0.035 wt% with respect to the solid content of the sweetener composition.

3.  The sweetener composition according to claim 1 or 2, wherein the total steviol glycoside content is 5 to 50 wt% with respect to the solid content of the sweetener composition.

4.  The sweetener composition according to any one of claims 1 to 3, wherein a furaneol/total steviol glycoside weight ratio is 0.001 to 0.8.

5.  The sweetener composition according to any one of claims 1 to 4, wherein the sweetener composition comprises rebaudioside B at a ratio of 1 to 85 wt% to the total steviol glycoside content.

6.  The sweetener composition according to any one of claims 1 to 5, wherein the flavor component is a flavor component derived from a stevia extract.

7.  The sweetener composition according to any one of claims 1 to 6, wherein the sweetener composition is obtained by hydrothermally treating a stevia plant under conditions involving a reaction temperature of 130°C or higher and a severity parameter of 30 to 4000 calculated according to the following expression (1):

[Math. 5]

Severity parameter $\qquad R_o = \int_0^t \exp\left(\dfrac{T(t) - T_r}{\omega}\right) dt \qquad$ Expression (1)

T(t): Time-dependent change in internal temperature of reaction container [°C]

Tr: Reference temperature (= 100°C)

ω: Constant (= 14.75)

t: Time (min)

8.  The sweetener composition according to any one of claims 1 to 7, wherein the total steviol glycosides consist of rebaudioside A, rebaudioside B, rebaudioside C, rebaudioside D, rebaudioside E, rebaudioside F, rebaudioside I, rebaudioside M, rebaudioside N, and stevioside.

9.  A food and drink comprising the sweetener composition according to any one of claims 1 to 8.

10. The food and drink according to claim 9, wherein the food and drink is a beverage.

Fig. 1

Figure 1: Glycoside recovery rate against severity parameter

# Fig. 2

Figure 2: Glycoside recovery rate against severity parameter (single log)

Fig. 3

Figure 3: Production of furaneol

# Fig. 4

Figure 4: Production of hydroxymethylfurfural

## INTERNATIONAL SEARCH REPORT

| International application No. |
|---|
| **PCT/JP2022/023258** |

**A. CLASSIFICATION OF SUBJECT MATTER**

*A23L 27/00*(2016.01)i; *A23L 2/60*(2006.01)i
FI:  A23L27/00 E; A23L27/00 101A; A23L2/00 C

According to International Patent Classification (IPC) or to both national classification and IPC

**B. FIELDS SEARCHED**

Minimum documentation searched (classification system followed by classification symbols)

A23L27/00; A23L2/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-528732 A (PEPSICO, INC.) 17 October 2019 (2019-10-17)<br>    claims, paragraph [0009], examples | 1, 3-10 |
| Y | | 1-10 |
| X | WO 2021/100729 A1 (AJINOMOTO CO., INC.) 27 May 2021 (2021-05-27)<br>    claims, paragraphs [0135], [0155], examples | 1, 3-10 |
| Y | | 1-10 |
| X | JP 2001-095502 A (T HASEGAWA CO LTD) 10 April 2001 (2001-04-10)<br>    claims, paragraph [0011], examples | 1-10 |
| Y | | 1-10 |
| Y | JP 2013-507914 A (PURECIRCLE SDN BHD) 07 March 2013 (2013-03-07)<br>    paragraph [0187] | 1-10 |
| X | JP 2017-507141 A (MCNEIL NUTRITIONALS, LLC.) 16 March 2017 (2017-03-16)<br>    examples | 1-10 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/023258** |

**C.    DOCUMENTS CONSIDERED TO BE RELEVANT**

| Category* | Citation of document, with indication, where appropriate, of the relevant passages | Relevant to claim No. |
| --- | --- | --- |
| X | OHTA, Masaya et al. Characterization of Novel Steviol Glycosides from Leaves of Stevia rebaudiana Morita. Journal of Applied Glycoscience. 2010, vol. 57, no. 3, pp. 199-209 column "MATERIALS AND METHODS" | 1-10 |

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| JP | 2019-528732 | A | 17 October 2019 | US | 2019/0208803 | A1 | |
| | | | | claims, examples | | | |
| | | | | US | 2021/0345647 | A1 | |
| | | | | WO | 2018/053135 | A1 | |
| | | | | EP | 3512351 | A1 | |
| WO | 2021/100729 | A1 | 27 May 2021 | (Family: none) | | | |
| JP | 2001-095502 | A | 10 April 2001 | (Family: none) | | | |
| JP | 2013-507914 | A | 07 March 2013 | WO | 2011/046423 | A1 | |
| | | | | paragraph [0180] | | | |
| | | | | US | 2011/0092684 | A1 | |
| | | | | US | 2011/0091608 | A1 | |
| | | | | US | 2011/0091634 | A1 | |
| | | | | US | 2011/0091635 | A1 | |
| | | | | US | 2011/0091637 | A1 | |
| | | | | US | 2011/0091628 | A1 | |
| | | | | US | 2011/0091602 | A1 | |
| | | | | US | 2011/0091617 | A1 | |
| | | | | US | 2011/0091394 | A1 | |
| | | | | US | 2011/0091633 | A1 | |
| | | | | US | 2011/0091600 | A1 | |
| | | | | US | 2011/0091630 | A1 | |
| | | | | US | 2011/0091629 | A1 | |
| | | | | EP | 2358730 | A1 | |
| | | | | EP | 2708548 | A2 | |
| JP | 2017-507141 | A | 16 March 2017 | US | 2015/0257424 | A1 | |
| | | | | examples | | | |
| | | | | WO | 2015/126876 | A1 | |
| | | | | EP | 3114131 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. B. KOVACEVIC ; F. J. BARBA ; D. GRANATO ; C. M. GALANAKIS ; Z. HERCEG ; V. DRAGOVIC-UZELAC ; P. PUNTNIK.** Pressurized hot water extraction (PHWE) for the green recovery of bioactive compounds and steviol glycosides from Stevia rebaudiana Bertoni Leaves. *Food Chemistry,* 2018, vol. 254, 150-157

- **Z. YANG ; B. UHLER ; T. LIPKIE.** Microwave-Assisted Subcritical Water Extraction of Steviol Glycosides From Stevia rebaudiana Leaves. *Natural Product Communication,* 2019, vol. 14 (6), 1-4